# EUROPEAN PATENT APPLICATION

(11) **EP 1 925 211 A1**
(43) Date of publication of application: **28.05.2008**
(21) Application number: 06077275.3
(22) Date of filing: 19.12.2006
(51) Int. Cl.: A23K 1/00, A23D 7/005, A23D 9/05, B01J 13/04

(54) **Process for the preparation of powdered oils**

(30) Priority: 27.11.2006 EP 06077106
(71) Applicant: Friesland Brands B.V., 7943 PE Meppel (NL)
(72) Inventor: Bastiaans, Johannes Adrianus Henricus Petrus, 3823 DP Amersfoort (NL); Poortinga, Albert Thijs, 7331 AL Apeldoorn (NL)
(74) Representative: van Loon, C.J.J.

(57) **Abstract**

The present invention relates to a process for the preparation of powdered oils and more particularly to oil encapsulated in a protein containing matrix. In addition, the present invention relates to the powdered oils obtainable by such a process, and the use of these products in the preparation of food compositions, and preferably animal food compositions, such as ruminant food compositions.

## Description

The invention relates to a process for the preparation of powdered oils and more particularly to oil encapsulated in a protein containing matrix. In addition, the present invention relates to the powdered oils obtainable by such a process, and the use of these products in the preparation of food compositions, and preferably animal food compositions, such as ruminant food compositions. Further, the invention relates to a method to increase the level of unsaturated fatty acids in milk with an accompanying decrease of the level of trans fatty acids in milk.

In many technical fields, a need exists to consume polyunsaturated fatty acids. The intake of oils high in polyunsaturated fatty acids instead of saturated fats, is for instance promoted because of nutritional health reasons.

From a technological point of view such oils are however more difficult to be processed, stored and/or applied in animal or human nutrition, because these oils are sensitive towards chemical and/or biochemical oxidation or hydrogenation reactions.

Usually, the oily ingredients are processed in stable oil-in-water emulsions or stable powders depending on the end use.

Powdered oils are generally formed by encapsulating the oil in protein, for example soy protein, forming an emulsion further comprising water and a suitable protein material and drying the emulsion to form a powdered oil. Japanese patent publication 5030906 discloses such a product made by mixing diacetyl ester tartrate monoglyceride and edible oil in an aqueous sodium caseinate solution, emulsifying and drying said mixture to form a powder.

Japanese patent publication 5098286 discloses the encapsulation of unsaturated fatty acids, such as gamma-linolenic acids, with hydrolysed proteins such as lactalbumin, lactoglobulin and casein to prevent oxidation of the acids.

Hydrolysed proteins vary in activity according to the degree of hydrolysation and this may vary with different oils. Further, the stability of the protein film encapsulating the oils is not always satisfactory. The protection against oxidation is primarily due to the hydrolysed protein preventing contact between oxygen and the unsaturated fatty acids rather than an antioxidant effect of the encapsulant.

US Patent No. 5,601,760 discloses micro-encapsulation of milk fat and orange oils using whey proteins as the encapsulant. This patent also suggests that the whey proteins can be mixed with carbohydrates.

US Patent No. 5,143,737 discloses an animal feed supplement composed of an unsaturated oil encapsulated in a whey solution containing lactose which has been dried to form a powder and then browned to form a Maillard reaction product in the encapsulating matrix.

The present inventors aimed at the provision of a process for preparing an encapsulant for sensitive oils and/or oil soluble substances, which encapsulant is based on an aggregation, and preferably a heat induced aggregation, of protein, such as whey protein. This encapsulant is prepared by denaturation of (globular) proteins, followed by an aggregation and cross-linking of the unfolded proteins In the present description and the appending claims, sensitive oils and sensitive oil soluble substances are edible oils from e.g. vegetable, animal, marine, algae or yeasts sources with contain poly unsaturated fatty acids and preferably high levels of polyunsaturated fatty acids with "high levels" we mean at least 2 wt.%, preferably at least 5 wt.%, drawn to the weight of the total oil fraction, of polyunsaturated fatty acids. Examples of sensitive oils are fish oil, algae oil, soybean oil, sunflower oil, cottonseed oil, rapeseed oil, linseed oil, safflower oil, corn oil and peanut oil.

The industrial processing of such an encapsulate is not easy. Due to aggregation of proteins in an oil-in-water emulsion, a high viscosity is developed. This leads to problems to produce the encapsulate in a continuous operation. See e.g. WO 04/012520 in which aggregation is realised in batch sterilisation in cans. Such a process cannot produce large quantities in bulk packaging nor in a continuous manner.

WO01/74175 is aiming at an encapsulant that has good encapsulating properties and is also an antioxidant to protect oxygen sensitive oils or oil soluble products. This document describes an encapsulant that is made from protein (e.g. milk protein) and carbohydrates with reducing sugar groups which was subjected to a heat treatment in an aqueous solution to obtain Maillard reaction products that have oxidative stability. Also, in US Patent No. 5,143,737 such a composition (protein and reducing sugar) is used to encapsulate using cross-linking with a Maillard browning reaction.

The invention disclosed in US Patent No. 5,601,760 relates to an encapsulate based on whey protein using a spray-drying process which encapsulate is required to have high solubility properties (see column 2, line 13) and requires low viscosity of its concentrated solutions (see column 2, line 14). The process described in this patent does not provide a denaturation / aggregation step of the whey proteins prior to spray-drying (heating not above 65°C) (column 9, line 63 and column 10 line 19).

We have found a process in which a protein, and especially a whey protein stabilised oil-in-water emulsion is prepared via emulsification and homogenisation after which an in-line heat treatment denaturates and aggregates all whey proteins and this heat treated emulsion is spray dried into dry powder particles.

These powder particles have bad solubility. In general this solubility is perceived as unacceptable since in a lot of applications a powder needs to be dispersed finely or soluted to have a homogeneous distribution of this ingredients. This bad insolubility is in the invention however turned into a great advantage for protecting the encapsulated ingredients against (bio)chemical and microbial activity, thus preventing the ingredients from deterioration.

In a first aspect, the present invention relates to a process for encapsulating oil and/or oil soluble substances, comprising preparing an oil-in-water emulsion, wherein a stabilising amount of protein is present, denaturing and aggregating the protein, and spray-drying the denatured, aggregated oil-in-water emulsion into dry powder particles. Generally, a stabilizing amount of protein requires minimal 5% protein, preferably 10 to 15% of protein. More preferably, between 12 and 35% protein is used. The lower limit is governed by the required stabilizing effect. The upper limit is especially determined by the overall costs.

Powder particles obtained by this process have a bad water solubility. The skilled person generally considers a bad water solubility as unacceptable for a spray-dried product, since for most spray-dry applications a powder is to be prepared that needs to be dispersed finely or needs to be soluble to have a homogeneous distribution of its ingredients. For the present application, the bad water solubility is however an advantage in that it leads to an increased protection of the encapsulated ingredients against (bio)chemical and microbial activity, thus preventing the ingredients from deterioration.

Another surprising aspect of the present invention is that the denatured and aggregated emulsion is very viscous Generally, the lower limit of the viscosity is 60 mPa.s or preferably 100 mPa.s for the η100 at 30 °C as measured with a Haake VT500.

Generally, the skilled person will not consider such viscous emulsions as starting material for a spray-drying step.

In this light, reference is made to the review of Prof. Walzel in Chem.-Ing.-Tech. 62 (1990) Nr. 12, pages 983-994, who observes that the commonly used "Hohlkegeldfsen sind für höhere Flüssigkeitsviskositäten ungeeignet". For a 1 mm nozzle, a viscosity of 50 mPa.s is said to be the maximum viscosity. Hollow cone nozzles are, however, very suitable for application in the present invention.

Vega & Roos describe in J. Dairy Sci. (2006); 86(2): 383-410 that effective microencapsulation requires capsules of high physical integrity, i.e., the core material should be completely surrounded and protected by the encapsulant (or wall system). An ideal wall material for use in microencapsulation should have bland flavour, high solubility, and possess the necessary emulsification, film-forming, and drying properties. In addition, Vega and Roos refer to Rosenberg & Young, Food Struct. (1993), 12:31-41, which article teaches that the concentrated solution should have low viscosity to facilitate the spraying process.

Vega and Roos further teach that perhaps the main disadvantage relative to the use of whey protein (WP) as encapsulant is its susceptibility to heat denaturation and the effects on emulsion particle size before spray drying and after reconstitution (Sliwinski et al., Colloid. Surface B (2003) 31: 219-229. Heating of WP-stabilized emulsions at 80°C results in aggregation of particles and a reduction in the kinetic stability of the emulsion (Damodaran and Anand, J. Agric. Food Chem. (1997) 45:3813-3820; Demetriades et al., J. Food Sci. 1997, 62:462-467). An increase in the concentration of WP accelerates the rate and degree of aggregation, suggesting that the main mechanism is the denaturation and aggregation of unadsorbed protein (Euston et al., Food Hydrocoll. (2000); 14:155-161.).

In a preferred embodiment of the present invention, the oil-in-water emulsion is homogenized.

Preferably, the protein comprises whey protein, and more preferably consists of whey protein. However also other proteins that aggregate upon heating such as soy protein isolate, can suitable be used.

In the most effective embodiment of the process of the invention, the denaturation step is carried out by heating the protein above its denaturation temperature. This denaturation step is preferably carried out in line with the homogenization step.

In a suitable embodiment, the process of the present invention preferably uses an aqueous emulsion comprising 10-60 wt.% dry matter and preferably 20-50 wt.% dry matter. This dry matter may comprise 3-50 wt.%, preferably 5-40 wt.%, more preferably 7-30 wt.% drawn on the dry mater of a protein source high in protein, Generally, a protein source high in protein contains at least 35 wt.% protein, more preferably at least 75 wt.% protein; it encompasses protein concentrates and isolates from e.g. soy bean, potato protein, whey protein, milk protein and mixtures thereof; up to 10 wt.%, drawn on the weight of dry matter, preferably up to 5 wt.% of salts, carbohydrates including cellulose and starch present in the protein source; and the balance being the oil component, and preferably unsaturations containing oils, and more preferably polyunsaturated fatty acids containing oil.

As mentioned herein-above, the oil preferably is an oil rich in polyunsaturated fatty acids or a mixture of oils rich in polyunsaturated fatty acids e.g. fish oil, algae oil, soybean oil, sunflower oil, cottonseed oil, rapeseed oil, linseed oil, safflower oil, corn oil. A very surprising and advantageous effect of the present invention is that an encapsulation technique is found that does not result in an increase in trans fatty acids. More preferably, the invention even leads to a decrease of trans fatty acids in milk to less than 3% more preferably less than 2% and most preferably less than 1.5%.

It is noted that increasing the level of unsaturated fatty acids in milk is generally done by feeding the dairy cow a feed product containing unsaturated fatty acids. It is known that all or part of the unsaturated fatty acids are modified into trans unsaturated fatty acids by biohydrogenation in the rumen. In the art, attempts of techniques were made to protect the unsaturated oils from biohydrogenation. These methods, however, do protect only partly. That is, in these known cases it is found that a (varying) part of the unsaturated fatty acids is still biohydrogenated to trans fatty acids.

The finding that the encapsulated feed product of the present invention, prepared with the method of the invention results in a decrease of trans fatty acids in milk fat. As can be seen in working examples 3 and 4 hereinbelow.

In a further aspect, the present invention hence also relates to a method for avoiding or reducing the formation of trans fatty acids from unsaturated (cis) fatty acids in the rumen of a ruminant, by encapsulating unsaturated (cis) fatty acids using the process of the invention and feeding the powdered encapsulate to a ruminant.

In yet a further aspect, the present invention relates to the use of the encapsulated product of the invention to reduce or even avoid the formation of trans fatty acids.

In the process of the present invention, the oil, protein source and water are mixed and emulsified to form an o/w-emulsion wherein the oil phase preferably has an average particle size(D_{3,2}) of 0.9 to 10 µm, preferably 1.5 to 8µm. This emulsion is directly homogenised at temperature between 20 and 65 °C and with a pressure of 100 to 500 bar preferably at 300 to 450 bar to form a fine emulsion with particle size (D_{3,2}) between 0.10 and 1.0, more preferably between 0.15 and 0.4.

This fine emulsion is heated in a stirring batch at about 80-90 °C or in line at a temperature of about 80- 140 °C to denaturate, aggregate and cross-link all the (globular) proteins present. The percentage of native proteins, as measured with HPLC is maximally 5%, preferably maximally 1% of the total protein content.

The heated and aggregated emulsion is spray dried with any known spray drying process, e.g. a conventional spray drying with nozzle or wheel, a belt spray drying equipment (e.g. known as Filtermat). Typical conditions of drying are a nozzle pressure of 60-150 bar, preferably 70-120 bar and more preferably 80-100 bar and air inlet temperature of 145-180 °C, more preferably between 145-160 °C.

In this light it is noted that denaturation of protein is defined as a significant change in secondary, tertiary and quarternary structure, without major change in primary structure. Denaturation often goes along with changes in the primary structure including changes in disulphide linkages and other bonds. Such secondary changes may cause denatured proteins to become insoluble (see, *e.g.* Prof.. Walstra; et al. in Dairy Technology: Principles of milk properties and processes; Marcel Dekker, New York, 1999. p. 77, which reference is incorporated herein by reference to describe the definition and process of denaturation.

Several reactions of side chain groups (and terminal groups) of protein can occur at high temperature. Many of these reactions (i.e., disulphide interchange reaction, cysteine-cysteine oxidation, reaction of dehydroanaline and cysteine to lanthionine; reaction of dehydroanaline and lysine to lysinoanaline; reaction of dehydroanaline and histidine to histidinoalanine; reaction of aspartic acid and lysine to isopeptide) can form cross-links within or between peptide chains. The first two reactions occur readily upon denaturation; the other reactions may require (for instance) high(er) temperatures. (P. Walstra et al. in Dairy Technology: Principles of milk properties and processes. Marcel Dekker, New York, (1999), 194-195).

The formation of a thermally induced gel matrix or coagulum from proteins involves the following three sequential events: denaturation, aggregation, cross-linking. Protein aggregation involves the formation of higher molecular weight complexes from the denatured protein, which then cross-link by specific bonding at specific sites of the protein strands or by nonspecific bonding occurring along the protein strands (see J.I. Boye; et al. in;.Thermal denaturation and coagulation of proteins. In: S. Damodaran; A. Paraf (eds.) Food proteins and their applications. Marcel Dekker, New York, 1997, pp. 25-56).

Although formally the denaturation and cross-linking of proteins are two different processes, the term denaturation is commonly used to describe the loss of native protein due to aggregation. In any practical food system denaturation (i.e. unfolding) will always go along with aggregation, and at high enough concentration with cross-linking.

In a preferred embodiment whey proteins are used. The major whey proteins are β-lactoglobulin, α-lactalbumin, and blood/bovine serum albumin; whey also includes immunoglobulins and small peptides. Whey proteins are susceptible to heat. The formation of a gel is similar to that of other globular proteins. If heated to temperatures above ~65°C, the whey proteins denature, thereby exposing reactive side chains of amino acids (i.e., free thiol groups and hydrophobic side groups). Subsequently, they may aggregate to form smaller or larger aggregates, or if the concentration of whey protein is high enough they may form a gel. Association of the proteins mainly involves thiol-disulfide exchange reactions, but also hydrophobic interactions may be involved.

Gelation of whey proteins by heating at a concentration above a critical point occurs by a mechanism similar to that of other globular proteins. Initial denaturation/perbutation of the protein structure is followed by intermolecular interactions that form a cross-linked matrix.

The obtained encapsulated powder contains almost only denatured proteins (the maximal percentage native proteins being about 5 wt.% or less).

The encapsulated powder is resistant to wetting, dispersing and solubilising in aqueous solutions and resistant to physiological proteolytical or lipolytical enzymes in e.g. saliva, abomasums, gut, rumen or enzymatic or microbial processes as e.g. cheese ripening. This makes that this powder differs from all kinds of other spray-dried powders; so that in a further aspect the invention relates to the powder encapsulates obtainable by the process of the present invention.

The powder obtained is suitably used in the following non-limiting applications:
- incorporation in food for ruminants, allowing the uptake of polyunsaturated oil in the milk or meat of the ruminants.
- incorporation in cheese, allowing the increase of the content of polyunsaturated fatty acids in cheese without deterioration of the polyunsaturates; and
- incorporation in food products such as bread, baked products, chocolate, and spreads, to increase the content of polyunsaturated fatty acids and protect the oil from deterioration.

The present invention will now be described while referring to the following non-limiting examples. Percentages are percentages by weight drawn to the weight of the complete composition, unless otherwise indicated.

### Examples

The raw materials used in this example are listed in Table 1, the composition of the oils was determined and is shown in Table 2.

**Table 1: Raw Materials used in this example**

| Materials | Supplier | Remarks |
|---|---|---|
| Hiprotal 580 * | FF Domo | 80 wt.% protein, 11 wt.% lactose; 4 wt.% mineral, 0.5 wt.% fat and 4.5 wt.% total moisture |
| Soy protein isolate Sypro 1751, IP Non-GMO Soy Bean oil Linseed oil (cold) pressed Water | Solae Compagny Romi Smilfood B.V. Bioriginal Tap water | 80 wt.% protein |

**Table 2: Composition of the oils used in this study [% fatty acids]**

| | structure | Linseed 80811-K07 | Soy Bean Oil 140.045 | mixture 1/1 |
|---|---|---|---|---|
| palmitic | C16:0 | 5.4 | 10 | 7.7 |
| heptadecenoic | C16:1 n 7 = cis | 0.0 | | |
| stearic | C18:0 | 3.8 | 6 | 4.9 |
| oleic | C18:1 n 9 = cis | 19.1 | 22 | 20.6 |
| linoleic | C18:2 n 6,9 = cis | 15.4 | 54 | 34.7 |
| alpha linolenic | C18:3 n 3,6,9 =cis | 55.9 | 8 | 32 |

The definitions used in this example are shown below

Native β lactoglobuline (%) = % native β lactoglobuline based on total solid material as determined with HPLC.

Particle size (Malvern) is determined with a method based on laser light diffraction with apparatus of Malvern type 2000 of Malvern Instruments Ltd Enigma Business Park Grovewood Road Malvern Worcestershire WR14 1XZ United Kingdom

### Cow test (in vivo test):

This is a two week feed trial with three cows to determine the effect on milk fat composition and milk yield. The feed trials are carried out at a Friesland Foods contracted test farm.

No feed supplement is added in the first week; the cows are fed with standard feed. The milk is analysed on Fatty Acid composition in the milk fat by gas chromatography to determine the standard level of individual fatty acids in the milk fat..

In the second week the feed supplement is additionally given to the cows and the milk was analysed to determine the effect of the feed supplement on the level of individual fatty acids in the milk fat.
A high increase of the cis poly unsaturated fatty acids (PUFA's) and a low increase of trans PUFA's during week two indicates good encapsulation of the oils. A low increase of the cis PUFA's and a high increase of trans PUFA's during week two indicates worse encapsulation of the oils.

In the examples, a two step homogenization process is used with pressure A/B meaning that A is the total homogenization pressure and B the pressure of the second step.

### Example 1 (internal code Q1268)

### Encapsulation.

To prepare an emulsion, precharge per 1000 kg: 663 kg water, 136 kg soybean oil, 136 kg linseedoil, 66 kg Hiprotal 580 powder (80% protein in dry matter) and mix. The mixture is emulsified with an Ultra Thurax ®at a temperature of 60°C followed by a homogenization 300/50 bar at 60°C followed by a batch heat treatment in a stirred vessel with 170 kg product for 1 hour at 82°C. The resulting highly viscous fluid (η₁₀₀ at 30°C is 115 MPa.s; D_{3,2}=0.15µm) is cooled to 60°C and spray dried with a Spraying Systems nozzle type Orrifice/core 70/27 at a pressure of 80 bar. The air inlet temperature is 155°C and 65°C outlet temperature with an air flow of 75%. The determined amount of native beta lactoglobuline is 0.08% The cow test was done by feeding the test cows 420 gram, twice a day per cow and resulted in a change in fatty acids as summarized in table 3.

Table 3: Percentage (gram per 100 gram fatty acids) of individual fatty acid in milk prior to and with addition of the encapsulate in the rumen food.

| | Example 1 (Q1268) | | Example 2 (Q1369) | |
|---|---|---|---|---|
| | prior ; no encapsulate | test: encapsulate | prior ; no encapsulate | test: encapsulate |
| C18:1w7/9tr | 2.08 | 2.23 | 2.16 | 2.26 |
| C 18:2w6cis | 1.00 | 3.39 | 0.92 | 3.50 |
| C18:3w3cis | 0.55 | 2.90 | 0.57 | 2.78 |
| C 18: 2conj (c9, t 11) | 0.67 | 0.65 | 0.70 | 0.64 |
| milking date | 29/8 morning | 5/9 morning | 31/10 morning | 7/11 morning |

### Example 2 (reference Q1369)

### Encapsulation.

To prepare an emulsion, precharge per 1000 kg: 663 kg water, 136 kg soybean oil, 136 kg linseedoil, 66 kg Hiprotal 580 powder (80% protein in dry matter) and mix. The mixture is emulsified with an Ultra Thurax at a temperature of 60°C followed by a homogenization 300/50 bar at 60°C directly followed in-line by a heat treatment with a Scraped Surface Heat Exchanger giving a heat treatment of 12 minutes at 110°C. The resulting highly viscous fluid (η₁₀₀ at 30°C is about 110 MPa.s; D_{2,3}=0.15 µm ) is cooled to 60°C and spray dried with a Spraying Systems nozzle type Orrifice/core 70/27 at a pressure of 80. The air inlet temperature is 155°C and 65°C outlet temperature with airflow of 75%.
The determined amount of native beta lactoglobuline is 0.4%.
The cow test was done by feeding the test cows 420 gram, twice a day per cow and resulted in a change in fatty acids as summarized in table 3.
Example 3 (reference Q1370)
Encapsulation.
To prepare an emulsion, precharge per 1000 kg: 663 kg water, 272 kg linseedoil, 66 kg Hiprotal 580 powder (80% protein in dry matter) and mix.
The mixture is emulsified with an Ultra Thurax at a temperature of 60°C followed by a homogenization 300/50 bar at 60°C directly followed in-line by a heat treatment with a Scraped Surface Heat Exchanger giving a heat treatment of 12 minutes at 110°C. The resulting highly viscous fluid (η₁₀₀ at 30°C is about 110 MPa.s; D_{2,3}=0.15 µm ) is cooled to 60°C and spray dried with a Spraying Systems nozzle type Orrifice/core 70/27 at a pressure of 144 bar.
The air inlet temperature is 155°C and 65°C outlet temperature with airflow of 70%. The determined amount of native beta lactoglobuline is 0.6%.
The cow test was done by feeding the test cows 420 gram, twice a day per cow and resulted in a change in fatty acids as summarized in table 4.

**Table 4: Percentage (gram per 100 gram fatty acids) of individual fatty acid in milk prior to and with addition of the encapsulate in the rumen food.**

| | Example 3 (Q1370) | | Example 4 (Q1265) | |
|---|---|---|---|---|
| | prior; no encapsulate | test: encapsulate | prior ; no encapsulate | test: encapsulate |
| C18:1w7/9tr | 1.85 | 1.74 | 1.63 | 1.42 |
| C18:2w6cis | 1.03 | 1.87 | 1.13 | 3.85 |
| C18:3w3cis | 0.63 | 3.70 | 0.43 | 2.72 |
| C18:2conj(c9,t11) | 0.63 | 0.51 | 0.51 | 0.42 |
| milking date | 31/10 morning | 7/11 morning | 18/07- morning | 25/7-morning |

### Example 4 (reference Q1265).

### Encapsulation.

To prepare an emulsion, precharge per 1000 kg: 445 kg water, 77 kg soybean oil, 77 kg linseedoil, 401.5 kg liquid WPC concentrate with 19.2% dry matter (80% protein in dry matter) and mix. The mixture is emulsified with an Ultra Thurax at a temperature of 60°C followed by a homogenization 300/50 bar at 60°C directly followed in-line by a heat treatment with a Scraped Surface Heat Exchanger giving a heat treatment of successively 1 minute at 80°C and 1 minute 110°C. The resulting highly viscous fluid (η₁₀₀ at 30°C is about 63 MPa.s; D_{2,3}=0.15 µm) is cooled to 60°C and spray dried with a Spraying Systems nozzle type Orrifice/core 70/27 at a pressure of 67 bar. The air inlet temperature is 155°C and 65°C outlet temperature with airflow of 75%. The determined amount of native beta lactoglobuline is 0.3%.
The cow test was done by feeding the test cows 500 gram, twice a day per cow and resulted in a change in fatty acids as summarized in table 4.

## Claims

1. Process for encapsulating oil and/or oil soluble substances, comprising preparing an oil-in-water emulsion, wherein a stabilising amount of protein is present, denaturing and aggregating the protein, and spray-drying the denatured, aggregated oil-in-water emulsion into dry powder particles.

2. The process of claim 1, wherein the oil-in-water emulsion is homogenized.

3. The process of claim 1 or 2, wherein the protein comprises whey protein, and preferably consists of whey protein.

4. The process of claim 1 or 2, wherein the protein comprises soy protein, and preferably consists of soy protein.

5. The process of any one of the preceding claims, wherein the denaturation step is carried out by heating the protein above its denaturation temperature.

6. The process of any one of the preceding claims, wherein the denaturation step is carried out in line.

7. The process of any one of the preceding claims, using an aqueous emulsion comprising 10-60 wt.% dry matter.

8. The process of claim 7, wherein the dry matter comprises 3-50 wt.%, preferably 5-40 wt., more preferably 7-30 wt.% drawn on the dry mater of a protein source high in; up to 10 wt.%, drawn on the weight of dry matter, preferably up to 5 wt.% of salts, carbohydrates including cellulose and starch present in the protein source; and the balance being the oil component, and preferably unsaturations containing oils, and more preferably polyunsaturated fatty acids containing oil.

9. The process according to any one of the preceding claims, wherein the emulsion is spraydried using a nozzle pressure of 60-120 bar and an air inlet of 140-180 °C.

10. Encapsulated product obtainable by the process of any one of the preceding claims.

11. Use of the encapsulated product of claim 10 in a ruminant food.

12. Use of the encapsulated product of claim 10 to avoid and preferably reduce the formation of trans fatty acids.

13. A method for avoiding or reducing the formation of trans fatty acids from unsaturated fatty acids in the rumen of a ruminant, comprising the steps of any one of the processes according to claims 1-9 and feeding the powder particles obtained to a ruminant.
